Europäisches Patentamt

European Patent Office

Office européen des brevets

(19)

(11) **EP 1 414 160 A1**

(12) **EUROPEAN PATENT APPLICATION**
published in accordance with Art. 158(3) EPC

(43) Date of publication:
**28.04.2004 Bulletin 2004/18**

(21) Application number: **02751814.1**

(22) Date of filing: **30.07.2002**

(51) Int Cl.⁷: **H04B 1/10**, H04B 1/69

(86) International application number:
**PCT/JP2002/007755**

(87) International publication number:
**WO 2003/013011 (13.02.2003 Gazette 2003/07)**

(84) Designated Contracting States:
**AT BE BG CH CY CZ DE DK EE ES FI FR GB GR IE IT LI LU MC NL PT SE SK TR**

(30) Priority: **30.07.2001 JP 2001229506**

(71) Applicant: **Sugita, Tadao**
**Nerima-ku, Tokyo 178-0065 (JP)**

(72) Inventor: **Sugita, Tadao**
**Nerima-ku, Tokyo 178-0065 (JP)**

(74) Representative: **Henkel, Feiler & Hänzel**
**Möhlstrasse 37**
**81675 München (DE)**

(54) **NOISE REDUCTION APPARATUS**

(57) Since the frequency band after the spread spectrum modulation is wide, the frequency of 2.4GHz band of the ISM (Industrial Scientific Medical) band as a modulation carrier frequency, is specified, so that the current state, in which the spread spectrum communication system can not be applied to the transmission by the frequencies other than 2.4GHz band, is considered, and thus the noise reduction effect equal with the spread spectrum communication system was obtained in the signal transmission in the frequencies other than 2.4GHz band, thereby obtaining a construction, in which the spread spectrum modulation is performed only at receiving side.

Noise reduction apparatus according to the present invention comprises a differentiating circuit for converting pulse string (SS signal) into sawtooth pulse string signal, means for pulse-width-modulating the converted sawtooth pulse string signal with input signals, and means for outputting the sawtooth pulse string signals which are pulse-width modulated with the above nput signal as an output signal, only at the time during which the pulse-width-modulated sawtooth pulse string signal is more than a given level.

**FIG. 7a**

FIG. 7b

FIG. 7c

**Description**

Prior Art

The present invention relates to a noise reduction apparatus that can be used for the whole of analog transmission and digital transmission, as well as its utilization apparatus, and a carrier regenerative device for reproducing the carrier used for it.

Spread spectrum (SS) communication method is known as a communication method to which the noise reduction effect is had. This system is a system for transmitting signals by expanding its frequency spectrum as shown in its name. As a general construction of the transmission system, the baseband signal is modulated by the spread signal and transmitted at the transmission side, and at receiving side, the received signal is again modulated (referred to as the reverse spread modulation) by the same spread signal as the transmission side, and the obtained signal is passed through a low-pass filter, thereby recovering baseband signals. As to the spread spectrum communication, refer to for example a publication written by Yamauchi "Spread spectrum communication" published by Tokyo Denki University Press, November, 1994.

The noise reduction effect (S/N improvement effect) according to the communication method is equal to a spread coefficient of the spread signal, so that if the spread coefficient is 100 times, a large S/N improvement effect of 40dB is obtained. (Refer to on page 35 of a publication "Wireless data transmission technology by the electric wave", published by CQ Publishing Co., Ltd.).

In this manner, the noise reduction effect of the spread spectrum communication system is large, but on adopting the system, the frequency band after the spread modulation is wide, so that it is specified to the frequency more than 2.4GHz band of the ISM (Industrial Scientific and Medical ) band as a carrier frequency performing the modulation of the signal, therefore, the spread spectrum communication system cannot be applied to transmission by the frequency below 2.4GHz band.

Description of the Invention:

An object of the present invention is to provide a noise reduction apparatus capable of obtaining the noise reduction effect equal to the spread spectrum communication system, even in the signal transmission of frequency band below the above 2.4GHz band.

To achieve the above object, an apparatus for reducing noises by performing the spread spectrum modulation only at receiving side according to the present invention comprises means for converting a rectangular pulse string into a steep sawtooth pulse string, means for pulse width modulating input signals with a steep sawtooth pulse string from the pulse string conversion means, and means for outputting steep pulse string which is pulse width modulated by the pulse width modulation means, whereby the noise reduction is performed so as to improve the signal-to-noise ratio of the above output signal compared with the signal-to-noise ratio of the above input signal.

Moreover, noise reduction apparatus according to the present invention further comprises a pulse width extension circuit for extending the pulse width of the steep pulse string which is pulse width modulated, at following stage.

The above steep sawtooth pulse string conversion means is a differentiating circuit.

Moreover, a carrier regenerative device for generating pulse string synchronized with input signal to be supplied to the noise reduction apparatus according to the present invention comprises means for taking out carrier components by filtering and amplifying input signal, and means for performing slave oscillation by amplifying the carrier component taken out to perform positive feedback to input side of carrier component taking out means.

The carrier component extracting means is a first vibrator and the slave oscillation means is a second vibrator.

The above vibrator is a quartz vibrator or a ceramic vibrator.

Brief Description of the Drawing:

Fig. 1 is a fundamental block diagram of an SS communication system.

Fig. 2 shows a waveform of spread signal at the transmission side, a waveform of received input signal at the receiving side, and a waveform of output signal of the SS modulator, respectively.

Fig. 3 is a fundamental block diagram of noise reduction apparatus according to the present invention.

Fig. 4 shows the strength of the signals derived when the sinusoidal wave is sampled by the SS signal that is not synchronized with the sinusoidal wave, assuming that SS signal, pulse string in the case of duty ratio $D_R$ being $0.5(T_C = T_B/2)$ and, the baseband signal being a sinusoidal wave of analog signal.

Fig. 5 shows the relation of $N_o/N_i = 2D_R$, the relation of $S_o/S_i = 2/\pi \cong -3.9dB$, and the relation of $S_o/S_i = 1$.

Fig. 6 is one constructional embodiment of a convenient pulse width modulation circuit constituted by using the inverter element to realize an implementation of the present invention.

Fig. 7 shows signal waveforms of the parts shown in the circuit of Fig. 6 by signs a, b, and c, respectively.

Fig. 8 shows the situation in which the SS signal is subjected to pulse width modulation.

Fig. 9 shows the SS modulation circuit represented by schematic symbol.

Fig. 10 shows a constructional embodiment in which the SS modulator is cascaded by as many as three steps through the amplifier.

Fig. 11 is a pulse width modulation amplifier circuit to which the noise reduction apparatus according to the present invention is applied.

Fig. 12 shows the detailed circuit diagram thereof.

Fig. 13 is a waveform diagram of signals at the points (a) to (h) of respective portions in Fig. 12, which shows operation of the pulse width modulating and amplifying circuit.

Fig. 14 is a circuit diagram showing the construction of the noise reduction high-gain antenna portion of the medium wave radio band, to which the noise reduction apparatus according to the present invention is applied.

Fig. 15 is a detailed circuit diagram showing the tuning and amplifying circuit of Fig. 14.

Fig. 16 is a circuit diagram showing the construction of the noise reduction high-gain antenna portion of the medium wave radio band that applies the noise reduction apparatus according to the present invention.

Fig. 17 is a circuit diagram showing the construction of the noise, interference, and multipath disturbance reduction receiver that applies the noise reduction apparatus according to the present invention.

Fig. 18 is a waveform diagram explaining the operation that removes the interference and jamming wave component in the receiver of Fig. 17.

Fig. 19 is a waveform diagram explaining the operation that removes the multipath disturbance component.

Fig. 20 is a circuit diagram showing the construction of a carrier reproduction and a local oscillating section in the receiver shown in Fig. 17.

Fig. 21 is an explanatory view showing the relation among signal frequency fr, local frequency fl, and IF frequency fi.

Fig. 22 is a circuit diagram showing the construction of a multistep synchronous sampling portion in the receiver shown in Fig. 17.

Fig. 23 is a waveform diagram of signals at the points (i) to (n) of respective portions in Fig. 22, which shows an operation of multistep synchronous sampling section.

Best Mode for Carrying-out of the Invention:

The present invention is explained in detail based on the Detailed Description of the Preferred Embodiments referring to the attached drawing as follows.

First of all, before explaining the present invention, a well-known spread spectrum communication system (hereafter, referred to as an SS communication system) is explained.

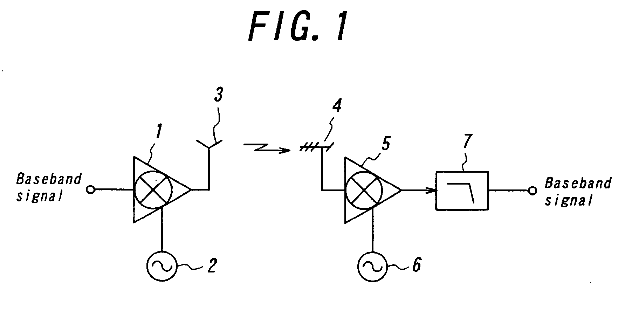

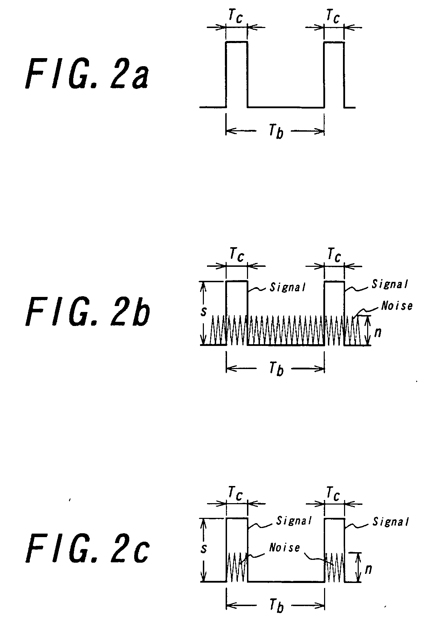

Fig. 1 is a fundamental constructive block diagram of the SS communication system. Moreover, Figs. 2(a), 2(b) and 2(c) show waveform of spread signal at the transmission side, waveform of received input signal at the reception side, and waveform of output signal of SS modulator, respectively.

In the SS communication system, the baseband signal is supplied to an SS modulator 1 at the transmission side as shown in Fig. 1, and the spread signal of the waveform shown in Fig. 2a (hereafter, referred to as an SS signal) is also supplied to the SS modulator 1 from an spread signal source 2, thereby transmitting the baseband signal modulated by the SS signal, from a transmission antenna 3.

On the other hand, in receiving side, similarly as shown in the Fig. 1, the reception input signal (this is shown in Fig. 2b) received by a receiving antenna 4 is supplied to an SS modulator 5, quite the same signal (signal of the waveform shown in Fig. 2a) as the signal generated in the SS signal source 2 at the transmission side, is generated from an SS signal source 6 in synchronization with the transmission side, and the received input signal is SS modulated with the generated signal. Thus SS-modulated signal is shown in Fig. 2c. The SS-modulated signal is derived as a baseband signal through a low pass filter 7 for the harmonic signal elimination.

Here, the S/N improvement according to the SS communication system is examined.

Now, assuming that the SS signal shown in Fig. 2a is a pulse string having pulse width $T_c$, pulse duration $T_b$, and thus duty ratio $T_c/T_b$ (hereafter, referred to as duty ratio $D_R$), signal strength of the reception input signal is $S_i$, the noise strength of the reception input signal is $N_i$, the signal strength of SS modulated (at receiving side) output signal is $S_o$, and, the noise strength of SS modulated (at receiving side) output signal is No, following relations can be obtained.

From

$$S_i = sT_c$$

$$N_i = nT_b,$$

$$S_i/N_i = sT_c/nT_b \tag{1}$$

From

$$S_o = sT_c$$

$$N_o = nT_c,$$

$$S_o/N_o = s/n \tag{2}$$

where, n and s are levels of noise and signal shown in Fig. 2b and Fig. 2c, respectively.

From the above, S/N improvement effect ((S/N)up) according to the SS communication system is shown as follows by taking the ratio of the equation (2) and the equation (1),

$$(S/N)up = (S_o/N_o) \cdot (N_i/S_i)$$
$$= T_b/T_c = 1/D_R \tag{3}$$

Moreover, in the field of the SS communication, $T_b$ is a bit section, $T_c$ is a chip section, and its ratio $T_b/T_c$ is referred to as a spread coefficient or a processing gain, thereby representing an S/N improvement effect.

The above is a conventional SS communication system, in which the same SS signal is used at the transmission side and at the receiving side, and the same SS modulation is performed. This will repeat the same signal processing (SS modulation) twice in one transmission system, so that even if the SS modulation at the transmission side is omitted and the SS modulation is performed only at receiving side, the S/N improvement effect is sure to be obtained.

The noise reduction method according to the present invention is obtained under such an idea.

Hereinafter, the noise reduction apparatus according to the present invention is explained.

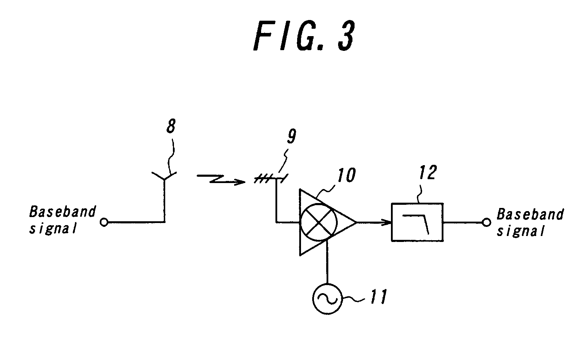

Fig. 3 is a fundamental block diagram of a noise reduction apparatus according to the present invention.

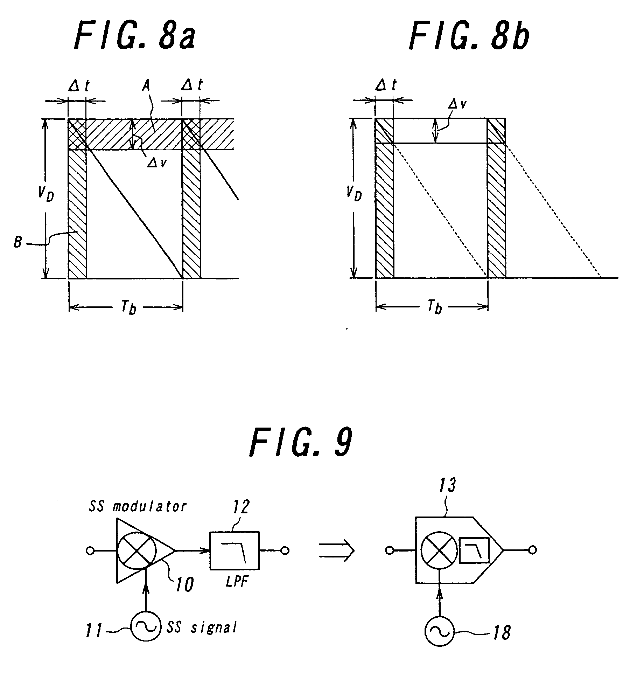

In Fig. 3, 8 is a transmission antenna, 9 is a receiving antenna, 10 is an SS modulator, 11 is an SS signal source and 12 is a low pass filter. These circuit elements are connected and arranged as shown in Fig. 3.

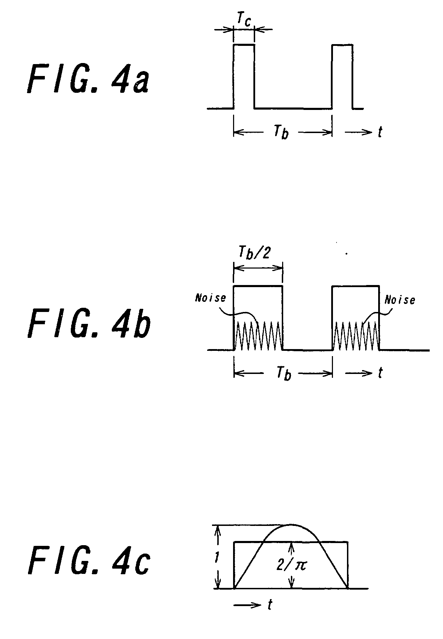

Figs. 4a, 4b and 4c show the strength of respective signals derived when the sinusoidal wave is sampled by the SS signal that is not synchronized with the sinusoidal wave, assuming that SS signal, pulse string in the case of duty ratio $D_R$ being $0.5(T_C = T_B/2)$ and the baseband signal, are a sinusoidal wave of analog signal, respectively.

The signal strength is shown by the area of the half period of the sinusoidal wave, and its mean value becomes $2/\pi$.

Moreover, assuming that the baseband signal is a sinusoidal wave of analog signal, the strength of the signal obtained by sampling its sinusoidal wave with the SS signal synchronized with the sinusoidal wave signal, can be obtained as the peak value of the sinusoidal wave always obtained during the half period of the sinusoidal wave, so that its mean value is 1.

Hereinafter, the S/N improvement of a system according to the present invention, that is, a system for performing the SS modulation only at receiving side, is examined as follows.

First of all, the maximum value of pulse width $T_c$ of the SS signal is $T_b/2$ ($T_b$ is a pulse duration), so that the noise strength $N_i$ of the received input signal becomes a noise included in the maximum value $T_b/2$.

Therefore, noise strength Ni of the received input signal can be shown by the following expression.

$$N_i = (n \cdot T_b)/2$$

where, n is level of noise shown in Fig. 4b.

Moreover, if n is assumed to be a level of the same noise, noise strength No of the output signal after SS modulation can be shown by the following expression.

$$N_o = nT_c$$

The following expression is obtained from these both equations.

$$N_o / N_i = 2 \cdot (T_c / T_b) = 2D_R \qquad (4)$$

Next, if signal strength of the received input signal is assumed to be $S_i$ when the sinusoidal wave is not synchronized with the SS signal, the signal strength $S_o$ of the output signal after SS modulation becomes following equation.

$$S_o = (2/\pi) S_i$$

Therefore,

$$S_0/S_i = 2/\pi \cong -3.9\text{dB} \qquad (5)$$

Moreover, when the sinusoidal wave has synchronized with the SS signal as well as described above, if signal strength of the received input signal is assumed to be $S_i$

$$S_o = S_i$$

Therefore, following equation (5') is obtained.

$$S_o/S_i = 1 \qquad (5')$$

From the above, S/N improvement effect ((S/N)up) according to the present invention is represented as follows, when the sinusoidal wave is not synchronized with the SS signal, by taking the ratio of the equation (5) and the equation (4),

$$(S/N)up = (S_o / S_i) / (N_o / N_i)$$
$$= (2/\pi) \cdot / \{2 \cdot (T_c / T_b)\}$$
$$= 1/\{\pi \cdot (T_c / T_b)\}$$
$$= 1/(\pi \cdot D_R) \qquad (6)$$

Moreover, when the sinusoidal wave is synchronized with the SS signal, the following expression is obtained by taking the ratio of the equation (5') and the equation (4),

$$(S/N)up = (S_o / S_i) / (N_o / N_i)$$
$$= T_b / (2T_c)$$
$$= 1/(2D_R) \qquad (6')$$

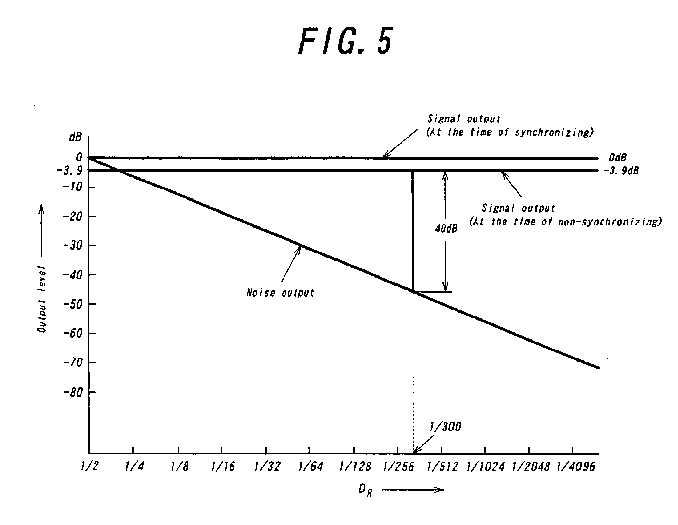

Fig. 5 shows a relation of $N_o/N_i = 2D_R$ represented by the above described equation (4), a relation of $S_o/S_i = 2/\pi \cong -3.9dB$ represented by the equation (5) and, a relation of $S_o/S_i = 1$ represented by the equation (5') by taking the duty ratio $D_R$ on abscissas, and by taking the output level on ordinate, respectively.

As understood from Fig. 5, now, if the duty ratio $D_R$ is 1/300, the level of $N_o/N_i$ represented by the equation (4) is positioned at about 40dB lower than the level of $S_o/S_i$ represented by the equation (5). That is, according to the present invention, it is shown that only the noise level is suppressed by about 40dB.

In this way, there has a nature that when the duty ratio $D_R$ of SS modulation is changed by the received input signal and the output signal after the SS modulation, though the level of $S_o/S_i$ is not changed, the smaller the duty ratio $D_R$ is, the smaller the level of $N_o/N_i$ is. A numerous noise reduction of the received signal can be performed by utilizing this nature.

However, it seems common sensibly, that when duty ratio $D_R$ becomes small and the pulse width narrows, the signal is also attenuated with the noise simultaneously, and SN ratio S/N is not changed, but, actually, the phenomenon that the signal is not attenuated since it is pulse-width-modulated, and only the noise decreases by the inclination of the sampling pulse, is caused. This is explained as to an actual circuit.

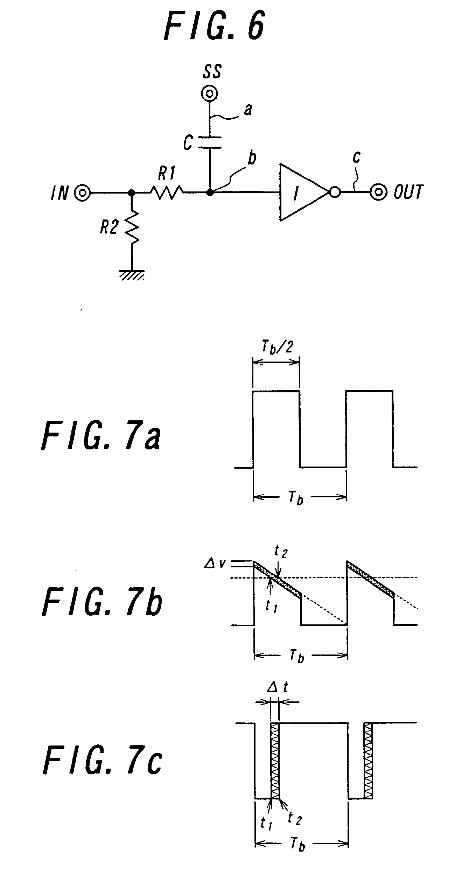

Fig. 6 is one constructional embodiment of a convenient pulse width modulation circuit constituted by using the inverter element to realize an implementation of the present invention.

Moreover, Figs. 7a, 7b, and 7c show signal waveform diagrams representing parts shown by a, b, and c respectively, in the circuit of Fig. 6.

The pulse width modulation circuit (constituting SS modulation circuit) shown in Fig. 6 comprises respective terminals of a signal input terminal IN, an SS signal input terminal SS and a modulation output terminal OUT, and its circuit elements comprise an inverter I, a capacitor C, a resistor R1, and a resistor R2 which are connected as shown in Fig. 6.

Operation thereof is explained.

First of all, assuming that a signal voltage $\Delta v$ of the input signal is inputted to signal input terminal IN. On the one hand, the SS signal with 0.5 duty ratio DR shown in Fig. 7a is applied to the SS signal input terminal SS. The capacitor C, the resistor $R_1$, and the resistor $R_2$ in the circuit constitute a differentiating circuit of time constant ($C \cdot (R_1+R_2)$), so that the SS signal applied to the input terminal SS is differentiated, thereby becoming a sawtooth pulse, and is inputted to the input terminal of the inverter I (refer to Fig. 7b).

At this time, the resistor $R_1$ and the resistor $R_2$ of the differentiating circuit constitute a voltage dividing circuit, and a signal voltage $\Delta v$ is applied between the junction of both resistors and the ground point. Therefore, the above sawtooth pulse applied to the input terminal of inverter I will be pulse-width-modulated according to the level of signal voltage $\Delta v$. When the level of the pulse-width-modulated sawtooth pulse exceeds the threshold level that is set to inverter I, the inverter I becomes active, so that the pulse width modulation wave shown in Fig. 7c is taken out of modulation output tcrminal OUT.

Fig. 8 shows the situation in which the SS signal is subjected to pulse width modulation.

The S/N improvement effect due to the pulse width modulation is explained by using Fig. 8.

In Fig. 8, when the level of signal voltage $\Delta v$ is changed, pulse width $\Delta t$ of the output pulse of inverter I and thus the duty ratio $D_R$ of the SS signal is decided by the vertical line passing through the point that the changed level thereof intersects with a diagonal line of the sawtooth.

At this time, the area of the part represented by a hatching shown in Fig. 8a becomes equal to each other in an oblong rectangular part A and in a longitudinal rectangle part B, so that the relation of the following expression is obtained,

$$\Delta t \cdot V_D = \Delta v \cdot T_b$$

where VD is power-supply voltage of the circuit,
Therefore, following equation is obtained.

$$\Delta v/V_D = \Delta t/T_b = D_R \tag{7}$$

As a concrete example, assuming that power-supply voltage $V_D = 3V$ and signal voltage $\Delta v = 10mV$, by substituting these values for the equation (7), a following relation is obtained.

$$\Delta v/V_D = 0.01/3 = 1/300 = \Delta v/T_b$$

Therefore, when the sampling pulse of the waveform of Fig. 8b is used, both the signal and the noise have been passed through the circuit only during the period of Δt.

Whereas the signal is passed without attenuating by the fact that Δv is converted into Δt, the noise is passed through only during the period of Δt, so that Δt corresponds to $T_c$ of the SS signal shown in Fig. 4a, and therefore, the duty ratio $D_R$ becomes as shown in the following expression.

$$\Delta t/T_b = 1/300$$

Referring to Fig. 5, the S/N improvement effect will be obtained by about 40dB at the duty ratio $D_R$ = 1/300.

This is identified from the fact that a thermal noise is not generated at all as the result of applying the noise reduction method according to the present invention to the medium wave radio receiver described later.

Here, the fact that Shannon's theorem can be derived from the above equation (4) and the equation (5), is explained.

Shannon's theorem is given by the equation shown by the equation (8).

$$C = W \cdot \log_2((P+N)/N) \tag{8}$$

where,

C is communication capability [bps]
W is transmission bandwidth [Hz]
P is average signal power [W]
N is average noise electric power [W]

This theorem shows the feature that if the transmission bandwidth W is very wide, no matter how transmitting power P is small, a constant communication capability can be ensured, and is assumed to be theoretical grounds of the spread spectrum system. When the theorem is applied to the equations (4) and (5), noise output No is shown by the following expression, since the noise input is $\sqrt{N}$

$$N_o = 2 \cdot (T_c/T_b) \cdot \sqrt{N}$$

Since the signal input is $\sqrt{(N+P)}$, signal output So is shown by the following expression.

$$S_o = (2/\pi) \sqrt{(N+P)}$$

Therefore, S/N can be shown by the following expression.

$$S_o/N_o = (2 \cdot \sqrt{(N+P)}/\pi) \cdot (T_b/(2 \cdot \sqrt{N} \cdot T_c))$$
$$= (1/\pi) \cdot (T_b/T_c) \cdot \sqrt{(N+P)/N} \tag{9}$$

Now, assuming that when the value of S/N is x, the communication can ensured, following expression is obtained.

$$S_o/N_o = x$$
$$= (1/\pi) \cdot (T_b/T_c) \cdot \sqrt{(N+P)/N}$$

Therefore,

$$\pi \cdot x \cdot (T_c/T_b) = \sqrt{(N+P)/N}$$

Here, the variable transformation is performed, and assuming that $\pi \cdot x \cdot (T_c /T_b ) = 2^{y(Tc /Tb)}$, a following expression is obtained.

$$2^{y(Tc /Tb)} = \sqrt{(N + P)/N}$$

Therefore, following equation (10) is obtained.

$$1/Tb =(1/(2y \cdot T_c )) \cdot \log_2((N+P)/N) \tag{10}$$

In the equation (10), assuming that $2y=1$, $1/T_b =C$, and $1/T_c =W$, so that when these values are substituted for the equation (10), the following expression is obtained.

$$C=W \cdot \log_2((P+N)/N)$$

This is not different from the Shannon's theorem explained by the equation (8), and the feature that equations (4) and (5) correspond to the Shannon's theorem. can be proven.

Moreover, if $1/T_b =C$, $1/T_c =W$ are substituted for the equation (9), the following expression is obtained,

$$\begin{aligned} S_o/N_o &=(1/\pi) \cdot (T_b / T_c) \cdot \sqrt{(N + P)/N} \\ &=(1/\pi) \cdot (W/C) \cdot \sqrt{(N + P)/N} \end{aligned} \tag{11}$$

In the SS communication term, $1/D_R =T_b /T_c =W/C$ is referred to as a spread coefficient, so that from the above equation (11), the Shannon's theorem can be paraphrased as that no matter how input signal electric power P is small if the spread coefficient is made large, S/N can make largely any much. The present invention applied this matter.

As described above, according to the present invention, the noise reduction can be carried out by performing the SS modulation only at the receiving side. In addition, if the SS modulation is performed only at receiving side, the number of times of the SS modulation is not limited to one time and can be performed even times how many, and the noise reduction effect can be obtained only by the number of times.

Now, assuming that to make the notation of Figure easy, as shown in Fig. 9, the SS modulation circuit shown in Fig. 3 is represented by schematic symbol.

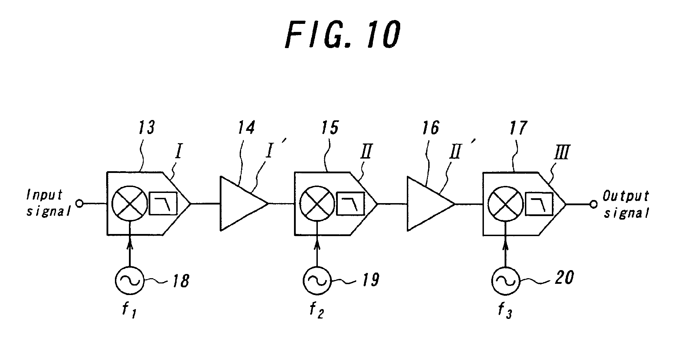

Fig. 10 shows a constructional embodiment in which the SS modulator is cascaded by as many as three steps through the amplifier, by this notification.

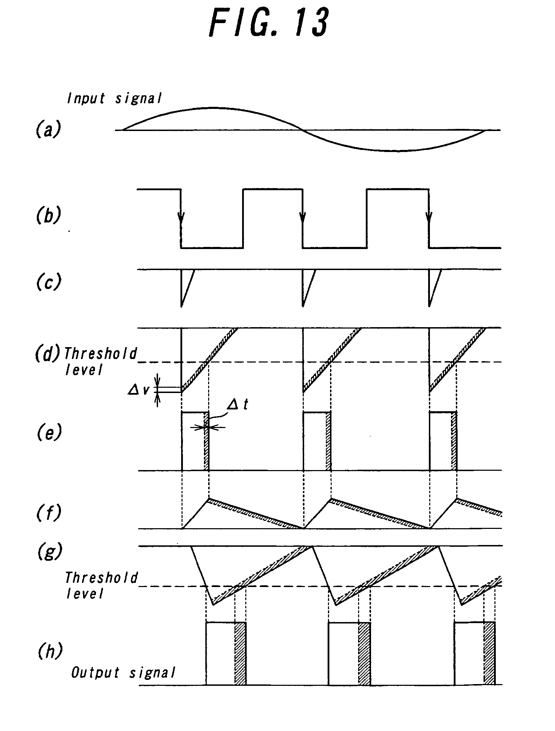

In the connection arrangement of Fig. 10, 13 is an SS modulating stage 1, 14 is an amplifier 1, 15 is an SS modulating stage 2, 16 is an amplifier 2, 17 is an SS modulating stage 3, 18 is an SS signal 1, 19 is an SS signal 2, and, 20 is an SS signal 3.

The operation of respective steps in this construction is as follows.

First of all, the SS modulating stage 1 shown by sign 13 reduces the external noise, the SS modulating stage 2 shown by sign 15 is reduces the thermal noise generated from the amplifier 1 (shown by sign 14), and, the SS modulating stage 3 shown by sign 17 reduces the thermal noise generated from the amplifiers 1 and 2 (shown by signs 14 and 16, respectively).

As the above, by performing the SS modulation, the reduction of the thermal noise generated from the amplifier can be performed, so that the signal can be amplified noiseless.

Moreover, in the construction shown in Fig. 10, respective different functions can be provided for the SS modulation circuit by the frequency of the SS signal supplied to respective steps.

For example, in Fig. 10, if frequency f1 of the SS signal 1 shown by sign 18 is a local frequency of the SS modulating stage 1 shown by sign 13, the SS modulating stage becomes an intermediate frequency (IF) conversion stage. Moreover, if frequency f3 of the SS signal 3 shown by sign 20 has synchronized with the input frequency of the SS modulating stage 3 shown by sign 17, the SS modulating stage becomes a synchronous detection circuit, and can provide an interference removal function.

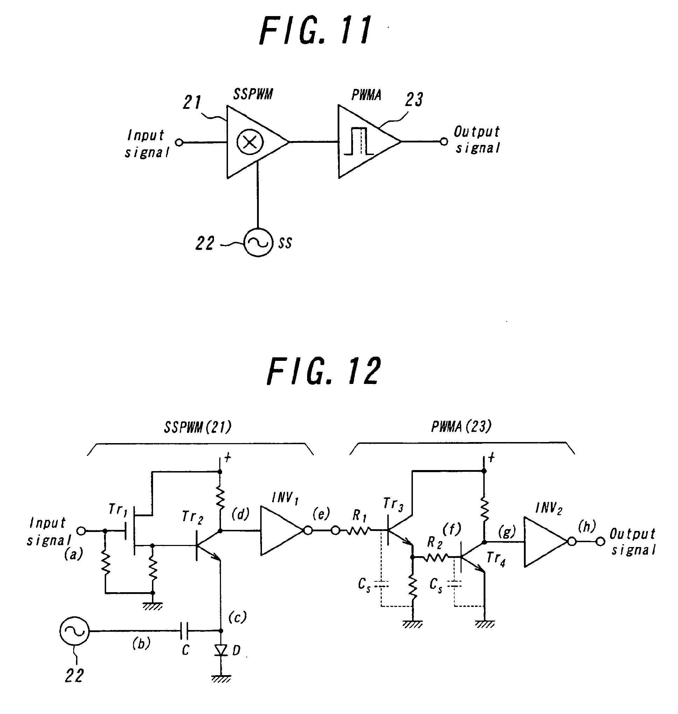

Hereinafter, the embodiment of the noise reduction pulse width modulating and amplifying circuit constituted by using the noise reduction apparatus according to the present invention is explained with reference to Fig. 11. In Fig. 11, SSPWM is a spread spectrum pulse width modulation circuit 21 having the noise reduction function according to the present invention, PWMA is a pulse width amplifier circuit 23, and SS is an SS signal source 22.

Fig. 12 shows an actual circuit configuration of such a noise reduction pulse width modulating and amplifying circuit. In Fig. 12, a field-effect transistor, a PNP transistor, an inverter circuit, a diode, a resistor, and a capacitor are connected as shown in the Figure.

The operation of the respective portions of such a circuit is explained by using the waveforms shown in Fig. 13.

First of all, in spread spectrum pulse width modulation circuit SSPWM, a transistor $T_{r1}$ is a buffer amplifier, and an input signal (a) is supplied to the base of a transistor $T_{r2}$. (b) is a sampling signal, and a steep triangular waveform (c) differentiated by a capacitance C and a diode D, is applied to the emitter of the transistor $T_{r2}$. Therefore, the waveform at the collector of the transistor $T_{r2}$ becomes a triangular wave (d) formed by the amplitude modulation of the input signal (a). In the section of $\Delta t$ during which a tip of a triangular wave becomes below the threshold level, an inverter $INV_1$ turns on, thereby forming a pulse width modulation wave (e) which is noise-reduced.

The above is an operation of a spread spectrum pulse width modulation circuit SSPWM. Then, as an operation of the pulse width amplifier circuit PWMA, firstly, a waveform (e) is integrated by a resistor $R_1$ of base of a transistor $T_{r3}$ and a stray capacitance $C_s$, and a resistor $R_2$ of base of a transistor $T_{r4}$ and the stray capacitance $C_s$ ($C_s$ is a stray capacitance between the base of the transistor and the ground.), so that a waveform (f) at the base of transistor $T_{r4}$ is subjected to an amplitude modulation, thereby forming a triangular wave of a gradual inclination. The waveform at the collector of the transistor $T_{r4}$ becomes a triangular wave (g) in which the waveform (f) is amplified. Again, when the tip of the triangular wave becomes below the threshold level, an inverter $INV_2$ turns on, thereby forming a pulse width modulated wave (e), which becomes an output signal. The pass band of the circuit is decided by a sampling frequency fs of the SS signal, and has the following function.

1. When the sampling frequency fs is 100KHz, the noise reduced amplifying from direct current to 30KHz can be performed. The present noise reduction pulse width modulating and amplifying circuit has a particularly large effect for noise reductions such as the noise reduction amplification, the scratch noise, the tape noises, and line noise or the like, to sensors of slight sensitivity such as the hearing aid, the microphone, and medical equipment.
2. When the sampling frequency fs is 5MHz, the noise reduced pulse width amplifying from direct current to 2MHz can be performed.
3. When the sampling frequency fs is made over 15MHz, the noise reduced pulse width amplifying from direct current to 6MHz, that is, of video signal can be performed.
4. By driving the power amplifier of D class with the use of the circuit as an exciter, the pulse width modulation transmitter from direct current to the video signal can be obtained.
5. Moreover, the circuit can be used as a mixer. In this case, assuming that the frequency of the input signal is fr, and the sampling frequency is fs, the signals with frequencies fr, fs ± fr, 2fs±fr, ...... nfs ±fr can be taken out.

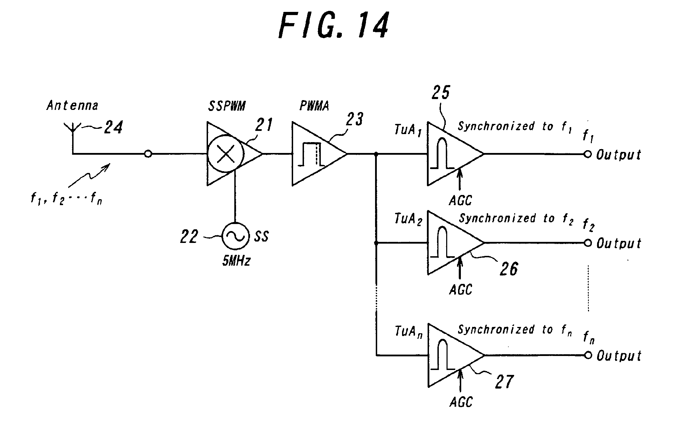

Hereinafter, the embodiment of the noise reduction pulse width modulating and amplifying circuit constituted by using the noise reduction apparatus according to the present invention is explained with reference to Fig. 11. In Fig. 14, input signals ($f_1$, $f_2$, ---, $f_n$) from a receiving antenna 24 are noise-reduced and amplified by the spread spectrum pulse width modulation circuit SSPWM21 and the pulse width amplifier circuit PWMA23. In this case, the signal of medium wave radio frequency band (531-1629KHz) is amplified, so that the sampling frequency to spread spectrum pulse width modulation circuit SSPWM21 from the SS signal source 22 was assumed to be 5MHz. The output of the pulse width amplifier circuit PWMA23 is amplified and outputted by tuning amplifier circuits TuAs 25, 26 and 27 tuned to frequencies ($f_1$, $f_2$, ---, $f_n$) of respective channels of the receipt input.

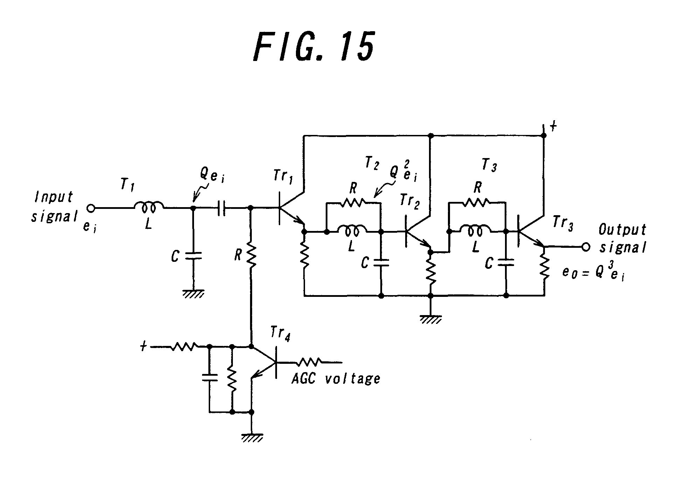

Fig. 15 shows the circuit configuration of the tuning amplifier circuits TuA (Tuning Amp). In Fig. 15, $T_1$, $T_2$, and $T_3$ are tuning circuits, which are constituted by an inductance L, a capacitance C, and a resistor R. In tuning frequency $f_0(=1/2\pi\sqrt{LC})$, assuming that an input voltage of the inductance L is $e_i$, the voltage of $Qe_i(Q=R/2\pi f_0 L)$ is obtained across the capacitance C. The feature of being amplified with the tuning circuit, and being obtained the voltage Q times, is to be risen the antenna gain Q times, so that if the value of Q is 10, the gain of the antenna is raised by 20dB. When the output of the tuning circuit $T_1$ is connected to following tuning circuit $T_2$ through the buffer amplifier of the transistor $T_{r1}$, the output thereof becomes $Q^2e_i$, and by connecting the output thereof to a tuning circuit $T_3$ through the transistor $T_{r2}$, the voltage of $Q^3e_i$ is obtained at the emitter output of the transistor $T_{r3}$. In this embodiment, assuming that Q=10,$Q^3$=1000=60dB, that is, as to all channels ($f_1$, $f_2$, ---, $f_n$), the antenna gain was improved by 60dB. However, when the value of Q is adjusted to 10 or more and the gain is raised, the circuit has been oscillated, so that the gain of the tuning circuit at one frequency is 60dB, which is its limitation.

The transistor $T_{r4}$ is for AGC control, and when the input level thereof is risen, the plus voltage is added to the base of the transistor $T_{r4}$, the voltage at the collector falls, and the voltage at the base of the transistor $T_{r1}$ falls,

and thus amplification degree of transistors $T_{r1}$, $T_{r2}$, and $T_{r3}$ decrease, so that the output voltage $e_0$ is controlled so as to become it below a constant level.

Assuming that the receiving antenna is made as a bar antenna used for the medium wave radio receiver, the gain of the bar antenna is -57dB (1MHz), so that the gain of the bar antenna becomes +3dB by the gain 60dB of the tuning and amplifier circuit. This shows that the gain of +3dB is as many as 30dB higher than the loop antenna of the large scale (gain -27dB), and thus a large-scale loop antenna of high cost can be replaced with a low-cost bar antenna.

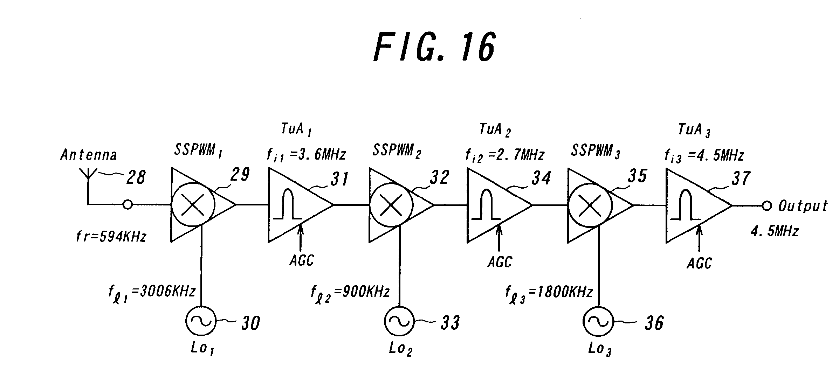

Hereinafter, the embodiment of the noise reduction high-gain antenna section of frequency conversion and amplification type, which is constituted by using the noise reduction apparatus according to the present invention, is explained with reference to Fig. 16.

As in the same way as described above, the limit of gain of tuning and amplifier circuits TuAs 3, 34, and 37, is 60dB, respectively. To obtain amplification more than the above limit, the frequency should be converted. The present embodiment is a system, for which the antenna input signal is frequency-modulated directly by using the mixer function of the spread spectrum pulse width modulation circuit SSPWM.

Hereinafter, the explanation of respective elements of the frequency conversion amplification type noise reduction high-gain antenna section shown in Fig. 16 is enumerated.

$SSPWM_1$:

The antenna input is supplied by a local oscillation frequency $fl_1$, and the noise reduction conversion is performed by the intermediate frequency $fi_1$ = 3.6MHz. As an embodiment of the frequency, a received frequency fr is assumed 594KHz and $fl_1$=3006KHz (594+3006=3600).

$TuA_1$ :

IF frequency $fi_1$=3600KHz is tuned and amplified by 60dB.

$SSPWM_2$:

The sampling is performed with $fe_2$=900KHz, and frequency 3.6MHz is converted into frequency 2.7MHz with the noise reduction. $TuA_2$ :
The frequency $fi_2$=2.7MHz is tuned and amplified by 60dB.

$SSPWM_3$:

The sampling is performed with $fe_3$=1.8MHz, and frequency 2.7MHz is converted into frequency 4.5MHz with the noise reduction.

$TuA_3$ :

The frequency $fi_3$=4.5MHz is tuned and amplified by 60dB.
The overall gain of the circuit becomes 150dB in total, since the conversion loss of spread spectrum pulse width modulation circuit SSPWM is -30dB according to three stage-cascade connection structure, and the gain of the tuning and amplifier circuit TuA is 180dB according to three-stage cascade connection structure. That is, the antenna of 150dB gain was able to be achieved.

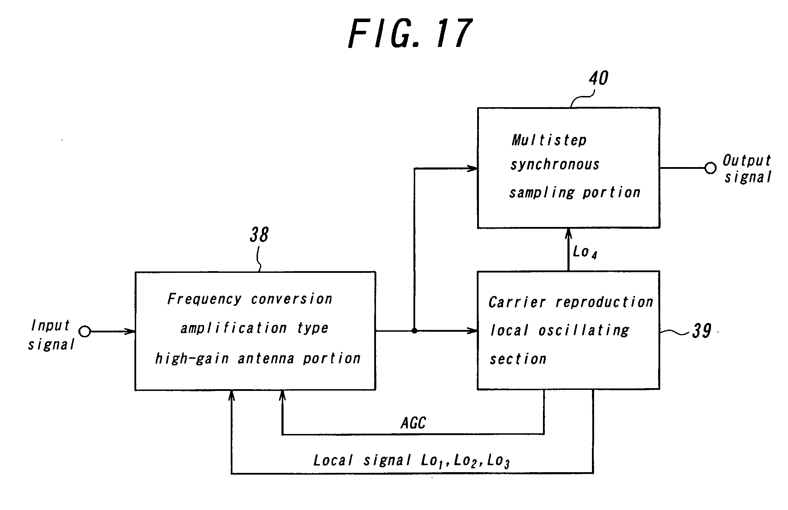

In the present embodiment, the present invention was applied to the antenna of the medium wave radio frequency, but can apply to the antenna of all the frequencies from the long wave to the SHF band by changing a local frequency. Next, Fig. 17 is a circuit diagram showing the construction of the noise, interference, and multipath disturbance reduction receiver constructed by using the noise reduction apparatus according to the present invention.

As shown in Fig. 17, the noise, interference, and multipath disturbance reduction receiver of the present embodiment, is constituted by a frequency conversion amplification type high-gain antenna portion 38, a carrier reproduction, local oscillating section 39, and a multistep synchronous sampling portion 40.

Necessity of Carrier Reproduction:

The random noise can be reduced by performing the spread spectrum pulse width modulation with the use of the arbitrary sampling frequency, but neither the jamming wave as the continuous wave nor the multipath transmission jamming components, can be reduced. The jamming wave and the multipath transmission jamming components can be reduced by sampling them with the pulse synchronized with the desired wave signal.

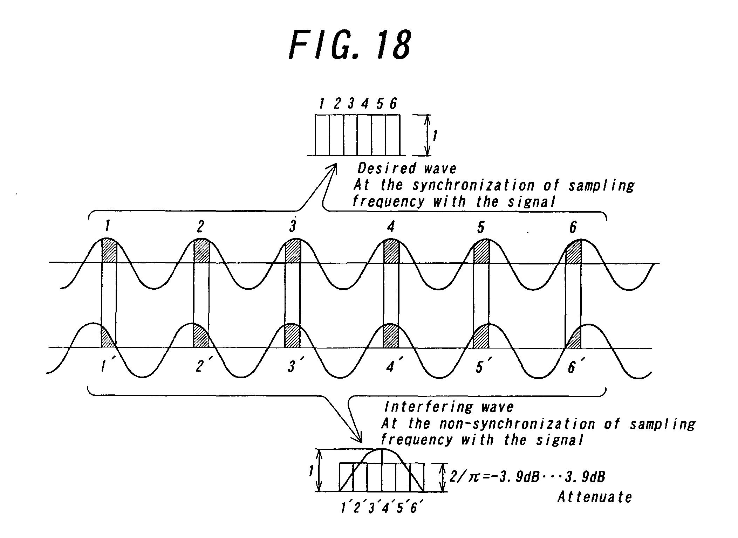

The operation thereof is explained by using the waveform shown in Fig. 18. The waveform in the upper row is a desired wave, and the state that the maximum value of the waveform is sampled, is shown, and when its sampling pulses are totaled, the output obtains 1=0dB. The lower waveform is a waveform where synchronization is not taken as an interfering wave. At this time, if the sampling pulses are totaled, it becomes a waveform of the half wave of the sinusoidal wave. The mean value thereof is $2/\pi$=-3.9dB, so that the output which is not synchronized becomes -3.9dB. That is, the reduction of the interfering wave can be realized by 3.9dB. If the synchronous sampling is repeated four times, the reduction of the interfering wave can be realized by $3.9\times4$=15.6dB.

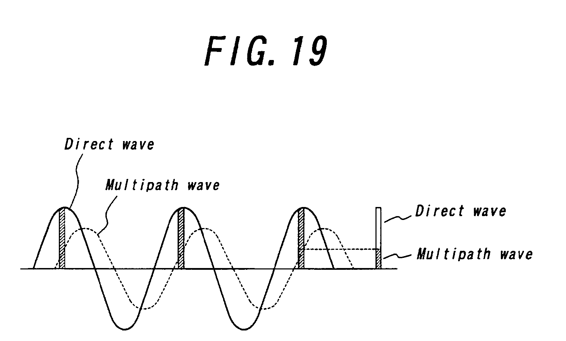

Similarly, as to the multipath disturbance, as shown in the waveform of Fig. 19, the multipath wave reaches with delay of the phase than the direct wave, so that the multipath wave is also attenuated by synchronously sampling the direct wave by a steep pulse. As shown in the embodiment of Fig. 19, in the case of the multipath wave to which the phase is delayed by 60°, the reduction can be performed by 6dB with the synchronous sampling in one stage and by 24dB with the synchronous sampling in 4 stages.

As described above, the sampling pulse synchronized with the input signal, is necessary to remove interference and the multipath disturbance, and thus the carrier reproduction is necessary to produce the sampling pulse.

Carrier reproduction and local oscillating section 39:

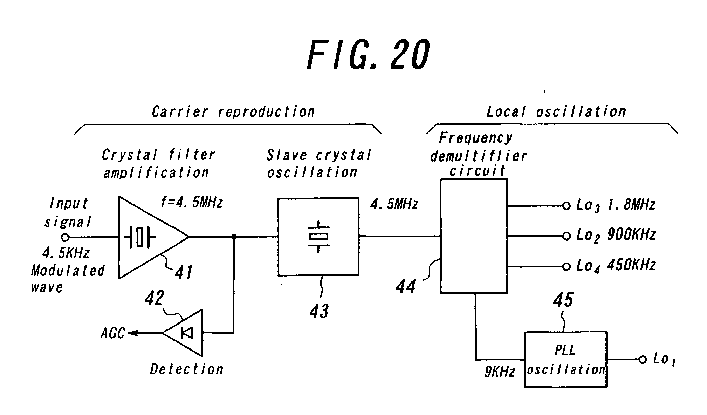

The construction of the carrier reproduction and local oscillating section 39 is shown in Fig. 20.

The carrier reproduction and local oscillating section 39 is constructed by a crystal filter amplifier circuit 41, a detector circuit 42, a slave crystal-oscillator circuit 43, a circuit 44 of dividing frequency, and PLL oscillation circuit 45, which are connected as shown in Figure. In this embodiment, the quartz vibrator was used as a filter and an oscillating element, but the ceramic oscillating element can also be used. Hereinafter, the explanation of these circuit elements is performed.

Crystal filter amplifier circuit 41:

The input signal of 4.5MHz is passed through the crystal filter, and amplified to derive a carrier component of 4.5MHz.

Detector circuit 42:

The carrier component of 4.5MHz is detected to output the AGC DC voltage, thereby controlling the tuning and amplifier circuit TuA.

Slave crystal-oscillator circuit 43:

The crystal-oscillator circuit is driven by 4.5MHz carrier component to make slave oscillation and reproduce the carrier of 4.5MHz.

Frequency dividing circuit 44:

The carrier-reproduced signal of 4.5MHz is frequency-divided to derive the local signals with frequency of $L_{03}$1.8MHz, $L_{02}$900kHz, $L_{04}$450kHz and 9kHz.

PLL oscillation circuit 45:

Oscillation circuit PLL is driven by using the frequency of 9kHz as a reference signal, to oscillate local signal $L_{01}$ of frequency 1.971kHz (3600-1629) - 3069kHz (3600-531) in 9kHz step.

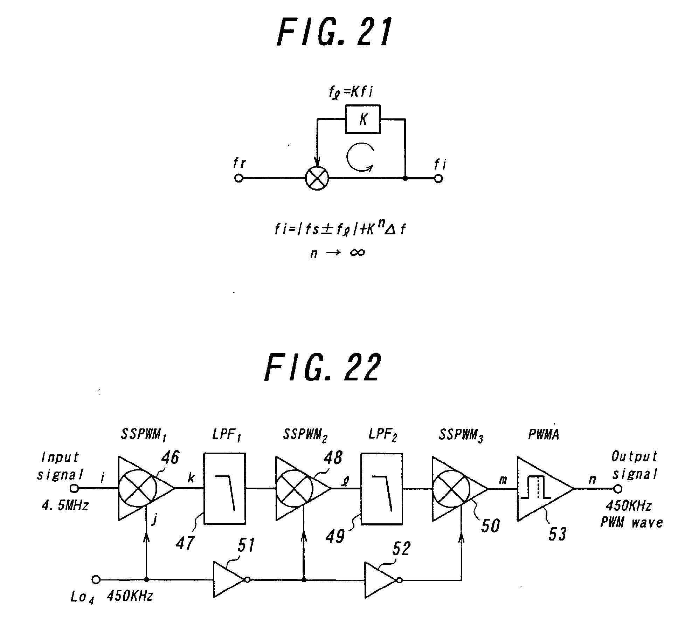

In the circuit, a system for generating the local oscillating signal from the IF signal, is adopted, and the relation among signal frequency fr, local frequency fl, and IF frequency fi is as shown in Fig. 21.

As shown in Fig. 21, assuming that fl=kfi, following relation is obtained.

$$fi=fr\pm fl+k^{n}\Delta f.$$

where, $\Delta f$ is an error frequency, firstly, if there is an error of $\Delta f$ is present in IF frequency, the error of local frequency fl becomes $k\Delta f$, and : since it is closed-loop, so that the error becomes $k^{2}\Delta f$, $k^{3}\Delta f$, and

$$k^n \Delta f (n \to \infty).$$

Here, in the down-conversion system adopted for the current radio reception here, it becomes fi<fl, 1<k, therefore, $k^n \Delta f$ becomes ∞ and it is diverged.

On the contrary, in the up-conversion system adopted by the present embodiment, it becomes fl<fi, k<1, therefore, $k^n \Delta f \to 0$ and it will converged. Therefore, the carrier reproduction wave of the up-conversion system of the present embodiment becomes the same precision as the received frequency fr. Permissible deflection of the radio network wave is ±10Hz, so that the deflection of the reproduced carrier becomes ±10Hz or less (±10ppm in 1MHz), too.

Multistep synchronous sampling section 40:

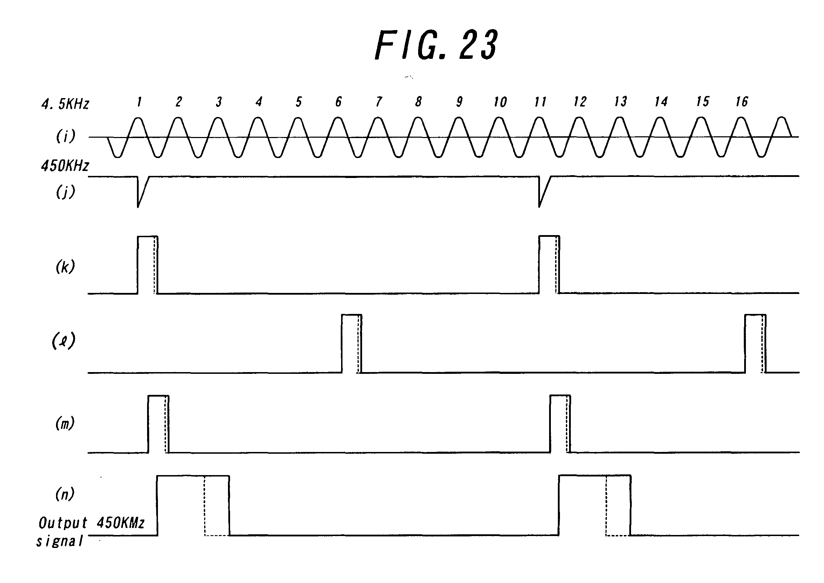

Fig. 22 shows the structure of multistep synchronous sampling portion 40. As is seen from Fig. 22, the multistep synchronous sampling portion 40 is constituted by three stages of the spread spectrum pulse width modulation circuit SSPWM and one stage of the pulse width amplifier circuit PWMA, and is a circuit performing the synchronous sampling of four times in total. The waveform of the each portion is shown in Fig. 23.

As is seen from Fig. 22, waveforms (i) and (j) sample frequency 4.5MHz by 450kHz, and thin out nine of ten carriers. Therefore, a large noise reduction effect is obtained. As is mentioned above, the effect of the reduction of the jamming wave and the multipath disturbance wave, of 15.6dB was achieved by the synchronous sampling.

The above embodiment explained for the medium wave radio, but the present invention is not limited to this embodiment, but can be applied to all media.

For example, the present invention is can also be applied to the reception of the carrier suppression type and the SSB system, and thus the ionospheric propagation wave with an extreme fading of the short-wave band can be received with stability.

Moreover, when the present invention is applied to the television reception, a large effect in reductions of such as the noise, ghosts, and Sporadic E layer propagation disturbances can be obtained.

Industrial Applicability:

As described above, according to the present invention, the noise rejection from direct current to the speech signal and the video signal can be performed, and the present invention can be applied to the noise reduction of all analogues and digital transmissions. Moreover, all noises can be removed with this apparatus.

If the effect as a spread spectrum system can be achieved by only the spread spectrum process at receiving side, all systems being performed now may be changed to the spread spectrum system at receiving side. In this case, the economic effect due to the feature of omissible the spread spectrum at the transmission side, is extremely large.

The feature that sensitivity rises in the AM radio receiver applying the noise reduction apparatus according to the present invention by 20dB or more compared with a current receiver, was identified as a result of the measurement. This shows that even if the output of the transmitter of a current radio network is decreased to 1/10, the sensitivity is still risen by 10dB. Presently, the medium wave radio network of our country transmits about 580 waves and thus 4,750kW with NHK together with commercial broadcastings, and the electricity cost required for the transmission thereof reaches as many as one billion yens par a year. If the transmission scale can be decreased to 1/10, by using the AM radio receiver, to which the noise reduction apparatus according to the present invention is applied, the reduction effects of the manufacturing cost of the transmitter and of the electricity cost are enormous. In addition, if seeing worldwide, the economic effect thereof is remarkably large.

Moreover, when the noise reduction apparatus according to the present invention is applied to the voice frequency band, the noise rejection filter can be obtained. From the above, the scratch noise in the record reproduction, the tape noise in the tape reproduction, and, the line noise in the telephone line can be removed, respectively.

Moreover, the carrier reproducing circuit according to the present invention can be used to the high fidelity reproduction of DSB (double sideband) and SSB (single sideband) waves.

In addition, if the noise reduction apparatus according to the present invention having the interference removal function is applied to the television reception, the jamming wave etc. according to the ghost and the sporadic E layer due to the multipath can also be removed.

**Claims**

1.   An apparatus for reducing noises by performing the spread spectrum modulation only at receiving side, comprising means for converting a rectangular pulse string into a steep sawtooth pulse string, means for pulse-width modulating input signals with a steep sawtooth pulse string from the pulse string conversion means, and means for outputting steep pulse string which is pulse-width modulated by the pulse width modulation means, whereby the noise reduction is performed so as to improve the signal-to-noise ratio of the above output signal compared with the signal-to-noise ratio of the above input signal.

2. Noise reduction apparatus as claimed in claim 1, further comprising a pulse width extension circuit for extending the pulse width of the steep pulse string which is pulse width modulated, at following stage.

3. Noise reduction apparatus as claimed in claim 1, wherein the steep sawtooth pulse string conversion mean is a differentiating circuit.

4. A carrier regenerative device for generating pulse string synchronized with input signal to be supplied to the noise reduction apparatus as claimed in claim 1 comprises means for extracting carrier components by filtering and amplifying input signal, and means for performing slave oscillation by amplifying the carrier component extracted to perform positive feedback to input side of the carrier component extracting means.

5. A carrier regenerative device as claimed in claim 4, wherein the carrier component extracting means is a first vibrator and the slave oscillation means is a second vibrator.

6. A carrier regenerative device as claimed in claim 5, wherein the vibrator is a quartz vibrator or a ceramic vibrator.

# FIG. 1

Baseband
signal

Baseband
signal

FIG. 2a

FIG. 2b

FIG. 2c

# FIG. 3

FIG. 4a

$T_c$

$T_b$

$t$

FIG. 4b

$T_b/2$

Noise

Noise

$T_b$

$t$

FIG. 4c

1

$2/\pi$

$t$

# FIG. 5

## FIG. 6

## FIG. 7a

## FIG. 7b

## FIG. 7c

# FIG. 8a

$\Delta t$    A    $\Delta t$

$\Delta v$

$V_D$

B

$T_b$

# FIG. 8b

$\Delta t$

$\Delta v$

$V_D$

$T_b$

# FIG. 9

SS modulator    12

10    LPF

11    SS signal

$\Rightarrow$

13

18

# FIG. 10

Input signal

13 — I

14 — I′

15 — II

16 — II′

17 — III

18 — f₁

19 — f₂

20 — f₃

Output signal

# FIG. 11

# FIG. 12

# FIG. 13

Input signal

(a)

(b)

(c)

(d) Threshold level

$\Delta v$

$\Delta t$

(e)

(f)

(g)

Threshold level

(h)

Output signal

# FIG. 14

# FIG. 15

# FIG. 16

FIG. 17

EP 1 414 160 A1

# FIG. 18

1 2 3 4 5 6

Desired wave
At the synchronization of sampling
frequency with the signal

Interfering wave
At the non-synchronization of sampling
frequency with the signal

$2/\pi = -3.9dB \cdots 3.9dB$

Attenuate

1′2′3′4′5′6′

# FIG. 19

Direct wave

Multipath wave

Direct wave

Multipath wave

# FIG. 20

**Carrier reproduction**

**Local oscillation**

Crystal filter amplification

Slave crystal oscillation

Frequency demultiflier circuit

Input signal

4.5KHz Modulated wave

f=4.5MHz

41

AGC

42

Detection

43

4.5MHz

44

9KHz

45

PLL oscillation

$Lo_3$ 1.8MHz

$Lo_2$ 900KHz

$Lo_4$ 450KHz

$Lo_1$

# FIG. 21

$$f_\ell = K f i$$

$$\boxed{K}$$

$$fr \quad \bigcirc \quad \longrightarrow \quad fi$$

$$f i = | f s \pm f_\ell | + K^n \Delta f$$

$$n \rightarrow \infty$$

# FIG. 22

Input signal $i$ — SSPWM$_1$ $46$ — $k$ — LPF$_1$ $47$ — SSPWM$_2$ $48$ — $\ell$ — LPF$_2$ $49$ — SSPWM$_3$ $50$ — $m$ — PWMA $53$ — $n$ — Output signal

4.5MHz

450KHz PWM wave

Lo$_4$ 450KHz   $51$   $52$

# FIG. 23

4.5KHz
(i)

450KHz
(j)

(k)

(l)

(m)

(n)

Output 450KMz
signal

EP 1 414 160 A1

| **INTERNATIONAL SEARCH REPORT** | International application No. |
|---|---|
| | PCT/JP02/07755 |

| A. CLASSIFICATION OF SUBJECT MATTER |
|---|
| Int.Cl$^7$  H04B1/10, H04B1/69 |

According to International Patent Classification (IPC) or to both national classification and IPC

| B. FIELDS SEARCHED |
|---|
| Minimum documentation searched (classification system followed by classification symbols) |
| Int.Cl$^7$  H04B1/10, H04B1/69 |

Documentation searched other than minimum documentation to the extent that such documents are included in the fields searched

| Jitsuyo Shinan Koho | 1922-1996 | Toroku Jitsuyo Shinan Koho | 1994-2002 |
|---|---|---|---|
| Kokai Jitsuyo Shinan Koho | 1971-2002 | Jitsuyo Shinan Toroku Koho | 1996-2002 |

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| A | JP 64-90634 A  (Kokusai Electric Co., Ltd.), 07 April, 1989 (07.04.89), Full text (Family: none) | 1-3 |
| A | JP 9-247111 A  (NEC Corp.), 19 September, 1997 (19.09.97), Full text (Family: none) | 1-3 |
| A | JP 10-84331 A  (Ibiden Sangyo Kabushiki Kaisha), 31 March, 1998 (31.03.98), Full text (Family: none) | 4-6 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 21 October, 2002 (21.10.02) | 05 November, 2002 (05.11.02) |

| Name and mailing address of the ISA/ | Authorized officer |
|---|---|
| Japanese Patent Office | |
| Facsimile No. | Telephone No. |

Form PCT/ISA/210 (second sheet) (July 1998)

INTERNATIONAL SEARCH REPORT

International application No.

PCT/JP02/07755

| C (Continuation). DOCUMENTS CONSIDERED TO BE RELEVANT | | |
|---|---|---|
| Category* | Citation of document, with indication, where appropriate, of the relevant passages | Relevant to claim No. |
| A | JP 2000-115266 A (Futaba Corp.), 21 April, 2000 (21.04.00), Full text (Family: none) | 4-6 |

Form PCT/ISA/210 (continuation of second sheet) (July 1998)

| INTERNATIONAL SEARCH REPORT | International application No. |
|---|---|
| | PCT/JP02/07755 |

---

**Box I    Observations where certain claims were found unsearchable (Continuation of item 1 of first sheet)**

This international search report has not been established in respect of certain claims under Article 17(2)(a) for the following reasons:

1. ☐  Claims Nos.:

   because they relate to subject matter not required to be searched by this Authority, namely:

2. ☐  Claims Nos.:

   because they relate to parts of the international application that do not comply with the prescribed requirements to such an extent that no meaningful international search can be carried out, specifically:

3. ☐  Claims Nos.:

   because they are dependent claims and are not drafted in accordance with the second and third sentences of Rule 6.4(a).

---

**Box II    Observations where unity of invention is lacking (Continuation of item 2 of first sheet)**

This International Searching Authority found multiple inventions in this international application, as follows:
  The special technical feature of claims 1 to 3 is to provide means for converting a signal into a saw-tooth pulse string, means for performing pulse-width modulation, and means for outputting a precipitous pulse string.
  The special technical feature of claims 4 to 6 is to provide means for filtering and amplifying a signal so as to extract a carrier component and means for amplifying the signal for positive feedback to its input side so as to perform slave oscillation.
  Consequently, there is no special technical feature common to claims 1 to 3 and claims 4 to 6.

1. ☐  As all required additional search fees were timely paid by the applicant, this international search report covers all searchable claims.

2. ☒  As all searchable claims could be searched without effort justifying an additional fee, this Authority did not invite payment of any additional fee.

3. ☐  As only some of the required additional search fees were timely paid by the applicant, this international search report covers only those claims for which fees were paid, specifically claims Nos.:

4. ☐  No required additional search fees were timely paid by the applicant. Consequently, this international search report is restricted to the invention first mentioned in the claims; it is covered by claims Nos.:

**Remark on Protest**    ☐    The additional search fees were accompanied by the applicant's protest.

   ☐    No protest accompanied the payment of additional search fees.

---

Form PCT/ISA/210 (continuation of first sheet (1)) (July 1998)